(19) Europäisches Patentamt

European Patent Office

Office européen des brevets

(11) **EP 1 750 099 B1**

(12) **FASCICULE DE BREVET EUROPEEN**

(45) Date de publication et mention de la délivrance du brevet:
**21.05.2008 Bulletin 2008/21**

(51) Int Cl.:
***G01D 5/244*** *(2006.01)*

(21) Numéro de dépôt: **05291654.1**

(22) Date de dépôt: **03.08.2005**

(54) **Dispositif et procédé de mesure de la position relative d'un marquage périodique ou quasi périodique**

Vorrichtung und Verfahren zur relativen Positionsmessung einer periodischen oder quasi-periodischen Markierung

Device and method for measuring the relative position of periodic or quasi-periodic marks

(84) Etats contractants désignés:
**CH DE FR GB LI**

(43) Date de publication de la demande:
**07.02.2007 Bulletin 2007/06**

(73) Titulaire: **CSEM Centre Suisse d'Electronique et de Microtechnique SA Recherche et Développement 2007 Neuchâtel (CH)**

(72) Inventeurs:
• **Franzi, Edoardo**
  **1400 Yverdon-les- Bains (CH)**

• **Heim, Pascal**
  **2024 St-Aubin (CH)**
• **Masa, Péter**
  **2208 Les Hauts-Geneveyes (CH)**

(74) Mandataire: **Bonnet, Michel et al**
**Cabinet JP COLAS**
**58 rue de Châteaudun**
**75009 Paris (FR)**

(56) Documents cités:
**EP-A- 0 576 004         US-A- 5 970 432**
**US-B1- 6 528 783**

## Description

La présente invention concerne un dispositif de mesure de la position relative d'un motif comportant un marquage spatialement périodique ou quasi périodique par une mesure de décalage de phase à l'aide d'au moins un signal de référence. Elle concerne également un procédé mis en oeuvre par ce dispositif.

Plus précisément, l'invention concerne un dispositif du type comportant :

- un réseau de détecteurs d'ondes électromagnétiques rétrodiffusées par le marquage pour la génération d'un signal de marquage, et
- une unité de calcul d'un déphasage du signal de marquage par rapport au signal de référence.

Un tel dispositif de mesure est par exemple décrit dans le brevet américain publié sous le numéro US 6,528,783.

Ce brevet décrit un mode de réalisation analogique du dispositif de mesure, dans lequel ledit au moins un signal de référence comporte en fait deux signaux de référence sinusoïdaux en quadrature de phase. Dans ce mode de réalisation, les coefficients des deux signaux sinusoïdaux en quadrature de phase sont implémentés de façon analogique à l'aide de capacités dont les valeurs sont déterminées par construction, de sorte que ces signaux de référence présentent une fréquence commune définie par construction.

Bien que cette méthode donne des résultats très précis lorsqu'elle est appliquée sur un grand nombre de périodes du signal à mesurer, elle présente l'inconvénient de nécessiter une très bonne correspondance entre la fréquence centrale spatiale du marquage dont la position relative est mesurée et la fréquence commune des signaux de référence. Cette contrainte est nécessaire pour permettre la mesure précise du décalage de phase du signal de marquage. Elle impose des tolérances mécaniques et optiques sévères pour les applications dans lesquelles la valeur absolue de la phase est essentielle. Dans les cas où la mesure est différentielle, comme pour le capteur de couple décrit dans le brevet US 6,528,783, un certain écart entre ces deux fréquences est tolérable, mais dégrade cependant la précision de la mesure.

L'invention vise à remédier à ces inconvénients en fournissant un dispositif de mesure qui ne nécessite pas de telles contraintes de précision par construction.

L'invention a donc pour objet un dispositif de mesure de la position relative d'un motif comportant un marquage spatialement périodique ou quasi périodique par une mesure de décalage de phase à l'aide d'au moins un signal de référence, comportant un réseau de détecteurs d'ondes électromagnétiques rétrodiffusées par le marquage pour la génération d'un signal de marquage et une unité de calcul d'un déphasage du signal de marquage par rapport au signal de référence, caractérisé en ce qu'il comporte en outre des moyens d'estimation d'une fréquence spatiale du marquage et des moyens de réglage automatique de la fréquence du signal de référence en fonction de la fréquence spatiale estimée.

En intégrant des moyens de mesure d'une fréquence spatiale du marquage dans le dispositif de mesure et des moyens de réglage de la fréquence du signal de référence en fonction de cette fréquence spatiale mesurée, on supprime les contraintes de précision mécanique et optique imposées par les dispositifs connus de l'état de la technique. En effet, les imprécisions sont compensées par la possibilité de régler automatiquement le signal de référence à la bonne fréquence.

De préférence, ledit au moins un signal de référence comporte deux signaux sinusoïdaux en quadrature de phase.

De préférence également, les moyens d'estimation d'une fréquence spatiale du marquage comportent un calculateur numérique de Transformée de Fourier Discrète du signal de marquage.

Une telle implémentation numérique est simple et permet d'obtenir aisément une estimation de la fréquence centrale du marquage. Cette fréquence centrale calculée à l'aide d'une Transformée de Fourier Discrète peut ensuite être utilisée pour générer de façon numérique le ou les signaux de référence, pour déterminer ensuite, de façon numérique également, le déphasage du signal de marquage. Une implémentation numérique comporte en outre l'avantage de pouvoir être envisagée pour un grand nombre d'applications. De plus, elle permet une liberté bien plus grande dans le choix de la précision de l'échantillonnage du signal de marquage mesuré et du ou des signaux de référence.

Un dispositif de mesure selon l'invention peut en outre comporter au moins l'une des caractéristiques suivantes :

- l'unité de calcul comporte un microprocesseur dans lequel sont en outre implémentés les moyens d'estimations et les moyens de réglage automatique, et
- le réseau de détecteurs est un réseau linéaire à contrôle d'exposition.

L'invention concerne également un procédé de mesure de la position relative d'un motif comportant un marquage spatialement périodique ou quasi périodique par une mesure de décalage de phase à l'aide d'au moins un signal de référence, comportant les étapes suivantes :

- détection d'ondes électromagnétiques rétrodiffusées par le marquage pour la génération d'un signal de marquage ;
- calcul d'un déphasage du signal de marquage par rapport au signal de référence,

caractérisé en ce qu'il comporte en outre les étapes suivantes :

- estimation d'une fréquence spatiale du marquage ; et
- réglage automatique de la fréquence du signal de référence en fonction de la fréquence spatiale estimée.

De préférence, l'estimation d'une fréquence spatiale du marquage est réalisée dans une fenêtre spatiale comportant un nombre entier de périodes spatiales du marquage.

Plus précisément, l'estimation d'une fréquence spatiale du marquage peut comporter les étapes suivantes :

- calculer la Transformée de Fourier Discrète du signal de marquage dans une première fenêtre spatiale de largeur W ;
- déterminer à l'aide de cette Transformée de Fourier Discrète une première estimation Te de la période du signal de marquage et du nombre n de périodes Te dans la fenêtre W ;
- déterminer, pour quelle largeur de fenêtre Wi, comprise entre (n-1)Te et nTe, la Transformée de Fourier Discrète présente une valeur maximale la plus élevée ;
- retenir cette largeur Wi, en tant que valeur optimale de fenêtre, et la fréquence correspondant à la valeur maximale de la Transformée de Fourier Discrète dans cette fenêtre optimale, en tant que fréquence spatiale du marquage.

L'invention sera mieux comprise à l'aide de la description qui va suivre, donnée uniquement à titre d'exemple et faite en se référant aux dessins annexés, dans lesquels :

- la figure 1 comporte un diagramme illustrant le principe d'une mesure de déphasage à l'aide de signaux de référence en quadrature ;
- la figure 2 représente schématiquement la structure générale d'un dispositif de mesure selon un mode de réalisation possible de l'invention ; et
- la figure 3 représente les étapes successives d'un procédé mis en oeuvre par le dispositif de la figure 2.

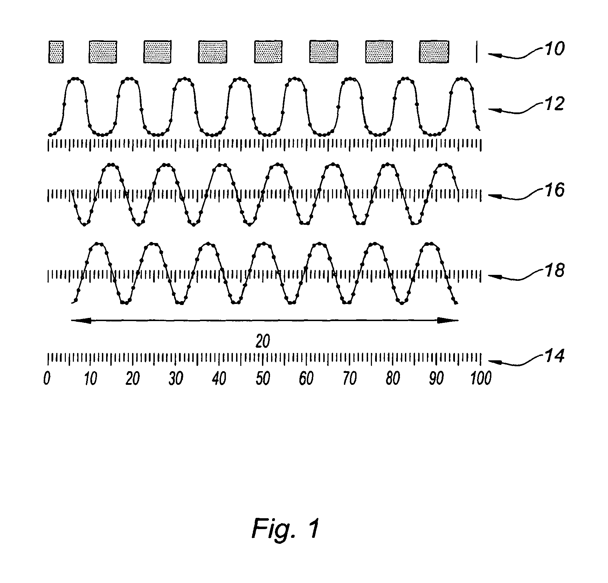

Le diagramme de la figure 1 représente tout d'abord un motif 10 comportant un marquage spatialement périodique ou quasi périodique et un signal de marquage 12 correspondant obtenu à l'aide d'un réseau de détecteurs d'ondes électromagnétiques rétrodiffusées par le marquage. Le signal de marquage 12 est échantillonné selon une fréquence d'échantillonnage spatial 14 prédéterminée.

Il est mis en correspondance sur ce diagramme avec deux signaux de référence 16 et 18 échantillonnés selon la même fréquence d'échantillonnage spatial 14. Le premier signal de référence 16 est une sinusoïde et le second signal de référence 18 est une sinusoïde également, identique à la précédente mais en quadrature de phase avec celle-ci.

Selon un procédé classique de mesure de déphasage en quadrature, le signal de marquage 12 est comparé aux signaux de référence en quadrature 16 et 18 dans une fenêtre spatiale 20 comportant un nombre entier de périodes de signaux de référence. Pour que cette mesure de déphasage en quadrature soit de bonne qualité, il est important que les trois signaux 12, 16 et 18 aient la même fréquence.

Plus précisément, le signal de marquage 12 est multiplié scalairement par les deux signaux de référence en quadrature 16 et 18 pour fournir deux résultats qui constituent les deux composantes X et Y d'un vecteur dont la phase est la mesure du déphasage du signal de marquage 12 par rapport aux signaux de référence 16 et 18.

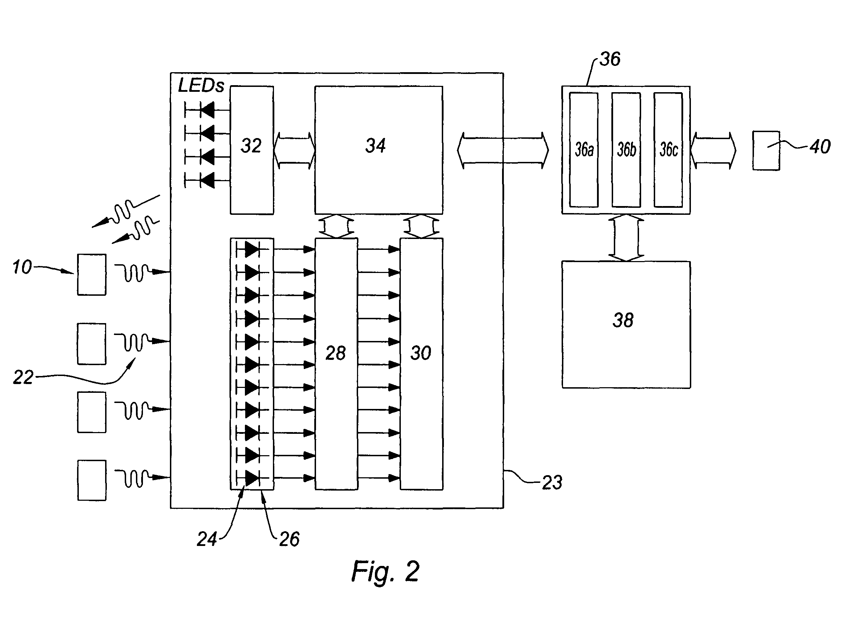

Le dispositif de mesure représenté sur la figure 2 comporte un réseau 26 de détecteurs 24 (par exemple des photodiodes) d'ondes électromagnétiques 22 rétrodiffusées par le motif 10 pour la génération du signal de marquage 12. Ce dispositif peut par exemple comporter un détecteur 23 d'ondes électromagnétiques linéaire avec contrôle d'exposition.

Le signal fourni en sortie du réseau 26 de détecteurs d'ondes électromagnétiques est analogique. Il est donc traité par un convertisseur analogique/numérique 28 pour générer le signal de marquage 12 échantillonné à la fréquence d'échantillonnage 14.

Les données relatives au signal de marquage 12 sont transmises à un ensemble 30 de registres de sortie pour une lecture sérielle de ces données par un bloc de contrôle général 34 du détecteur 23.

Une autre fonction du bloc de contrôle général 34 est de commander le réglage d'un bloc 32 de contrôle du temps d'exposition et de l'éclairage du réseau 26 de détecteurs d'ondes électromagnétiques. Ce bloc 32 commande le fonctionnement de diodes électroluminescentes (LEDs) pour l'émission vers le motif 10 des ondes électromagnétiques 22.

Le bloc de contrôle général 34 du détecteur 23 comporte en outre une interface avec un microprocesseur externe 36 de type DSP.

Ce microprocesseur 36 est associé à une mémoire 38 de type RAM, ROM, ou flash, par exemple, pour :

- effectuer le calcul d'une Transformée de Fourier Discrète du signal de marquage 12, par exemple au moyen d'une technique de calcul par FFT (de l'anglais "Fast Fourier Transform"),
- calculer à partir de cette Transformée de Fourier Discrète la fréquence centrale du signal de marquage 12 (moyens d'estimation 36a), et
- régler la fréquence des signaux de référence 16 et 18 à la valeur de la fréquence centrale calculée (moyens de réglage 36b).

Enfin, le microprocesseur 36 effectue le calcul du déphasage du signal de marquage 12 par rapport aux signaux de référence (moyens de calcul 36c).

Le résultat des calculs effectués par le microprocesseur 36 est transmis à une interface système 40 comportant des moyens classiques d'analyse de ce déphasage pour en déduire une mesure de la position relative du motif 10.

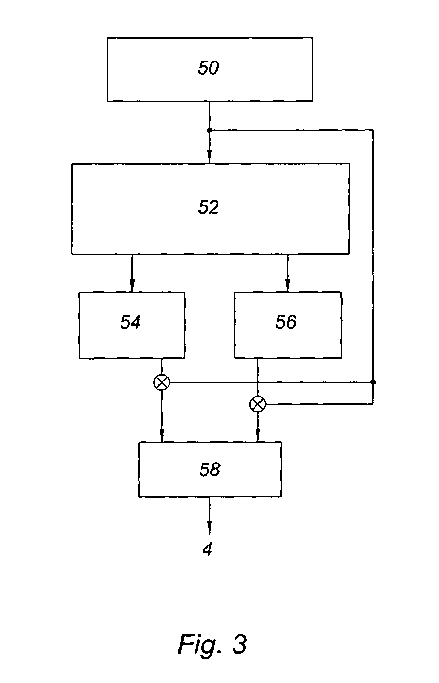

Le procédé mis en oeuvre par ce dispositif et comportant les étapes successives représentées sur la figure 3, comporte une première étape 50 de génération du signal de marquage échantillonné 12 par le détecteur 23.

Ensuite, il comporte une étape 52 d'estimation, par le microprocesseur 36, de la fréquence centrale du signal de marquage 12.

Cette estimation est réalisée sur la base du calcul d'une Transformée de Fourier Discrète par FFT dans une fenêtre spatiale ajustée sur un nombre entier de périodes du signal de marquage. L'ajustement de cette fenêtre spatiale à un nombre entier de périodes et l'estimation de la fréquence centrale se font conjointement de la façon suivante :

- calculer la Transformée de Fourier Discrète du signal de marquage dans une première fenêtre spatiale de largeur W ;
- déterminer à l'aide de cette Transformée de Fourier Discrète une première estimation Te de la période du signal de marquage et du nombre n de périodes Te dans la fenêtre W ;
- déterminer, pour quelle largeur de fenêtre Wi, comprise entre (n-1)Te et nTe, la Transformée de Fourier Discrète présente une valeur maximale la plus élevée ;
- retenir cette largeur Wi, en tant que valeur optimale de fenêtre, et la fréquence correspondant à la valeur maximale de la Transformée de Fourier Discrète dans cette fenêtre optimale, en tant que fréquence centrale du signal de marquage 12.

Lors de l'étape 54 suivante, la fréquence f du premier signal de référence 16 est réglée à la valeur de la fréquence centrale calculée et les coefficients échantillonnés de ce premier signal de référence sont calculés par le microprocesseur 36.

De même, lors d'une étape 56 suivant l'étape 52, la fréquence f du second signal de référence 18 est réglée à la valeur de la fréquence centrale calculée et les coefficients échantillonnés de ce second signal de référence sont calculés par le microprocesseur 36.

A l'issue des deux étapes 54 et 56, le signal de marquage 12 déterminé lors de l'étape 50 est multiplié scalairement avec les signaux de référence dont les coefficients ont été calculés lors des étapes 54 et 56, pour permettre le calcul, lors d'une dernière étape 58 du décalage de phase φ du signal de marquage 12 par rapport aux signaux de référence en quadrature 16 et 18.

Si l'on dispose de N échantillons dans la fenêtre spatiale 20 et que l'on note $s_{mi}$ les échantillons du signal de marquage 12, $\sin 2\pi ft_i$ les échantillons du premier signal de référence 16 et $\cos 2\pi ft_i$ les échantillons du second signal de référence 18, φ est définie par la relation suivante :

$$\varphi = Arc\tan\left[\frac{\sum\limits_{i=1}^{N} s_{mi}\sin 2\pi ft_i}{\sum\limits_{i=1}^{N} s_{mi}\cos 2\pi ft_i}\right].$$

Il apparaît clairement qu'un dispositif de mesure tel que décrit précédemment permet aisément de mesurer la position relative d'un motif comportant un marquage périodique ou quasi périodique, à l'aide notamment d'une méthode de mesure de déphasage en quadrature, sans nécessiter, par construction, un réglage précis du détecteur 23 d'ondes électromagnétiques, puisque la fréquence des signaux de référence peut être réglée dynamiquement en fonction d'une fréquence mesurée du signal de marquage.

**Revendications**

1. Dispositif de mesure de la position relative d'un motif (10) comportant un marquage spatialement périodique ou quasi périodique par une mesure de décalage de phase à l'aide d'au moins un signal de référence, comportant un réseau (26) de détecteurs (24) d'ondes électromagnétiques (22) rétro diffusées par le marquage pour la génération d'un signal de marquage (12) et une unité (36) de calcul d'un déphasage du signal de marquage par rapport au signal de référence, **caractérisé en ce qu'**il comporte en outre des moyens (36a) d'estimation d'une fréquence spatiale du marquage et des moyens (36b) de réglage automatique de la fréquence du signal de référence en fonction de la fréquence spatiale estimée.

2. Dispositif de mesure selon la revendication 1, dans lequel ledit au moins un signal de référence comporte deux signaux sinusoïdaux en quadrature de phase.

3. Dispositif de mesure selon la revendication 1 ou 2, dans lequel les moyens (36a) d'estimation d'une fréquence spatiale du marquage comportent un calculateur numérique de Transformée de Fourier Discrète du signal de marquage.

4. Dispositif de mesure selon l'une quelconque des revendications 1 à 3, dans lequel l'unité de calcul (36) comporte un microprocesseur dans lequel sont en outre implémentés les moyens d'estimations (36a) et les moyens de réglage automatique (36b).

5. Dispositif de mesure selon l'une quelconque des revendications 1 à 4, dans lequel le réseau (26) de détecteurs (24) est un réseau linéaire à contrôle d'exposition.

6. Procédé de mesure de la position relative d'un motif (10) comportant un marquage spatialement périodique ou quasi périodique par une mesure de décalage de phase à l'aide d'au moins un signal de référence, comportant les étapes suivantes :

     - détection (50) d'ondes électromagnétiques (22) rétro diffusées par le marquage pour la génération d'un signal de marquage (12) ;
     - calcul (58) d'un déphasage du signal de marquage par rapport au signal de référence,

**caractérisé en ce qu**'il comporte en outre les étapes suivantes :

     - estimation (52) d'une fréquence spatiale du marquage ; et
     - réglage automatique (54, 56) de la fréquence du signal de référence en fonction de la fréquence spatiale estimée.

7. Procédé de mesure selon la revendication 6, dans lequel l'estimation d'une fréquence spatiale du marquage (12) est réalisée dans une fenêtre spatiale comportant un nombre entier de périodes spatiales du marquage.

8. Procédé de mesure selon la revendication 7, dans lequel l'estimation d'une fréquence spatiale du marquage (12) comporte les étapes suivantes :

     - calculer la Transformée de Fourier Discrète du signal de marquage dans une première fenêtre spatiale de largeur W ;
     - déterminer à l'aide de cette Transformée de Fourier Discrète une première estimation Te de la période du signal de marquage et du nombre n de périodes Te dans la fenêtre W ;
     - déterminer, pour quelle largeur de fenêtre Wi, comprise entre (n-1)Te et nTe, la Transformée de Fourier Discrète présente une valeur maximale la plus élevée ;
     - retenir cette largeur Wi, en tant que valeur optimale de fenêtre, et la fréquence correspondant à la valeur maximale de la Transformée de Fourier Discrète dans cette fenêtre optimale, en tant que fréquence spatiale du marquage.

**Claims**

1. Device for measuring the relative position of a pattern (10) comprising a spatially periodic or virtually periodic marking by measuring the phase shift by means of at least one reference signal, comprising a network (26) of detectors (24) of electromagnetic waves (22) backscattered by the marking to generate a marking signal (12) and a unit (36) for calculating a phase displacement of the marking signal in relation to the reference signal, **characterised in that** it also comprises means (36a) for estimating a spatial frequency of the marking and means (36b) for automatically controlling the frequency of the reference signal as a function of the estimated spatial frequency.

2. Measuring device according to claim 1, in which the said at least one reference signal comprises two sinusoidal signals in quadrature phase.

3. Measuring device according to claim 1 or 2, in which the means (36a) for estimating a spatial frequency of the marking comprise a numerical calculator of the discreet Fourier transform of the marking signal.

4. Measuring device according to any one of claims 1 to 3, in which the calculating unit (36) comprises a microprocessor in which estimating means (36a) and automatic control means (36b) are also implemented.

5. Measuring device according to any one of claims 1 to 4, in which the network (26) of detectors (24) is a linear network with control of exposure.

6. Method for measuring the relative position of a pattern (10) comprising a spatially periodic or virtually periodic marking by measuring the phase shift by means of at least one reference signal, comprising the following steps:

     - detecting (50) electromagnetic waves (22) backscattered by the marking for generating a marking signal (12);
     - calculating (58) an angular displacement of the marking signal in relation to the reference signal,

**characterised in that** it also comprises the following steps:

     - estimating (52) a spatial frequency of the marking; and
     - automatically controlling (54, 56) the frequency of the reference signal as a function of the estimated spatial frequency.

7. Measuring method according to claim 6, in which the estimation of a spatial frequency of the marking (12) is performed in a spatial window comprising an integer of spatial periods of the marking.

8. Measuring method according to claim 7, in which the estimation of a spatial frequency of the marking (12) comprises the following steps:

- calculating the discreet Fourier transform of the marking signal in a first spatial window of size W;
- determining by means of this discreet Fourier transform a first estimation Te of the phase of the marking signal and number n of phases Te in window W;
- determining, for which size of window Wi, between (n-1)Te and nTe, the discreet Fourier transform has a greatest maximum value;
- retaining said size Wi, as the optimum value of the window, and the frequency corresponding to the maximum value of the discreet Fourier transform in this optimum window, as the spatial frequency of the marking.

**Patentansprüche**

1. Vorrichtung zur relativen Positionsmessung eines Musters (10), das eine räumlich periodische oder quasi-periodische Markierung umfasst, durch eine Messung der Phasenverschiebung mithilfe von zumindest einem Bezugssignal, umfassend ein Netz (26) aus Detektoren (24) für elektromagnetische Wellen (22), die von der Markierung für die Generierung eines Markierungssignals (12) rückwärts gestreut werden, und eine Einheit (36) zur Berechnung einer Phasendifferenz des Markierungssignals in Bezug auf das Bezugssignal, **dadurch gekennzeichnet, dass** sie des Weiteren Mittel (36a) zur Schätzung einer Ortsfrequenz der Markierung und Mittel (36b) zur automatischen Regelung der Frequenz des Bezugssignals in Abhängigkeit von der geschätzten Ortsfrequenz umfasst.

2. Messvorrichtung nach Anspruch 1, wobei das zumindest eine Bezugssignal zwei 90° phasenverschobene Sinussignale umfasst.

3. Messvorrichtung nach Anspruch 1 oder 2, wobei die Mittel (36a) zur Schätzung einer Ortsfrequenz der Markierung einen Digitalrechner für die diskrete Fourier-Transformation des Markierungssignals umfassen.

4. Messvorrichtung nach einem der Ansprüche 1 bis 3, wobei die Recheneinheit (36) einen Mikroprozessor umfasst, in dem des Weiteren die Schätzungsmittel (36a) und die Mittel zur automatischen Regelung (36b) implementiert sind.

5. Messvorrichtung nach einem der Ansprüche 1 bis 4, wobei das Netz (26) aus Detektoren (24) ein lineares Netz mit Belichtungskontrolle ist.

6. Verfahren zur relativen Positionsmessung eines Musters (10), das eine räumlich periodische oder quasi-periodische Markierung umfasst, durch eine Messung der Phasenverschiebung mithilfe von zumindest einem Bezugssignal, umfassend folgende Schritte:

- Erfassen (50) elektromagnetischer Wellen (22), die von der Markierung für die Generierung eines Markierungssignals (12) rückwärts gestreut werden;
- Berechnen (58) einer Phasendifferenz des Markierungssignals in Bezug auf das Bezugssignal,

**dadurch gekennzeichnet, dass** es des Weiteren folgende Schritte umfasst:

- Schätzen (52) einer Ortsfrequenz der Markierung; und
- automatisches Regeln (54, 56) der Frequenz des Bezugssignals in Abhängigkeit von der geschätzten Ortsfrequenz.

7. Messverfahren nach Anspruch 6, wobei die Schätzung einer Ortsfrequenz der Markierung (12) in einem Raumfenster durchgeführt wird, das eine ganze Anzahl von Raumperioden der Markierung umfasst.

8. Messverfahren nach Anspruch 7, wobei die Schätzung einer Ortsfrequenz der Markierung (12) folgende Schritte umfasst:

- Berechnen der diskreten Fourier-Transformation des Markierungssignals in einem ersten Raumfenster der Breite W;
- Bestimmen einer ersten Schätzung Te der Periode des Markierungssignals und der Anzahl n der Perioden Te im Fenster W mithilfe dieser diskreten Fourier-Transformation;
- Bestimmen, für welche Fensterbreite Wi, die zwischen (n-1)Te und nTe beträgt, die diskrete Fourier-Transformation einen höchsten Maximalwert aufweist;
- Festhalten dieser Breite Wi als optimalen Fensterwert sowie der Frequenz, die dem Maximalwert der diskreten Fourier-Transformation in diesem optimalen Fenster entspricht, als Ortsfrequenz der Markierung.

*Fig. 1*

*Fig. 2*

EP 1 750 099 B1

Fig. 3

**EP 1 750 099 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6528783 B